# EUROPEAN PATENT SPECIFICATION

(11) **EP 2 738 985 B1**
(45) Date of publication and mention of the grant of the patent: **06.04.2016**
(21) Application number: 12829031.9
(22) Date of filing: 17.07.2012
(51) Int. Cl.: H04L 12/70

(54) **ETHERNET INTERFACE PROTECTION METHOD AND NETWORK SIDE DEVICE**
ETHERNET-SCHNITTSTELLENSCHUTZVERFAHREN UND NETZWERKSEITIGE VORRICHTUNG
PROCÉDÉ DE PROTECTION D'INTERFACE ETHERNET ET DISPOSITIF CÔTÉ RÉSEAU

(30) Priority: 30.08.2011 CN 201110253131
(43) Date of publication of application: 04.06.2014
(73) Proprietor: ZTE Corporation, Shenzhen, Guangdong 518057 (CN)
(72) Inventor: LI, Xiaoli, Shenzhen Guangdong 518057 (CN)
(74) Representative: Lampis, Marco
(86) International application number: PCT/CN2012/078763
(87) International publication number: WO 2013/029438

(56) References cited:
- CN-A- 101 442 494
- CN-A- 101 562 575
- CN-A- 101 860 482
- CN-A- 102 291 311
- US-A1- 2009 207 728

## Description

### Technical field

The present invention relates to the field of communication technology, and in particular, to an Ethernet interface protection method and a network side device.

### Background of the related art

Based on requirements of fast network development, when any node or link of the network breaks down, it is required that the time for service switching is less than 50ms. For routes that Provider Edge (PE) devices connect with Customer Edge (CE) devices, the Virtual Private Network Fast Re-route (VPN FRR) technology is mainly used for solving the fault of the node or the route and realizing fast switching of the route.

The procedure of realizing the VPN FRR technology is that: end-to-end services are established between PE (or CE) and PE (or CE), and two available end-to-end routes are preconfigured, in which one route is selected as a primary route and the other is selected as a backup route. On a condition of not configuring a detection mechanism, a protocol convergence is triggered after the primary route has a failure, and the protocol sends a new backup route as a new primary route for forwarding traffics. The protocol calculation is generally difficult to meet the performance requirement, and thus the route detection mechanism is mainly used at present. When detecting that a certain link or a certain node on the primary route breaks down, a head node of the service is notified, and the head node introduces the service traffic into the backup route, and performs the route replace after the protocol calculates the new backup route, thereby achieving the purpose of the route protection and fast switching. However, in the related art, in the case that the route hops multiple devices, the time overhead is large for transmitting the detection message hopping the multiple devices, the switching performance is poor, and the detection is required to be supported by the opposite end device, which cause expansibility and compatibility of the PE devices (network side device) to be bad.

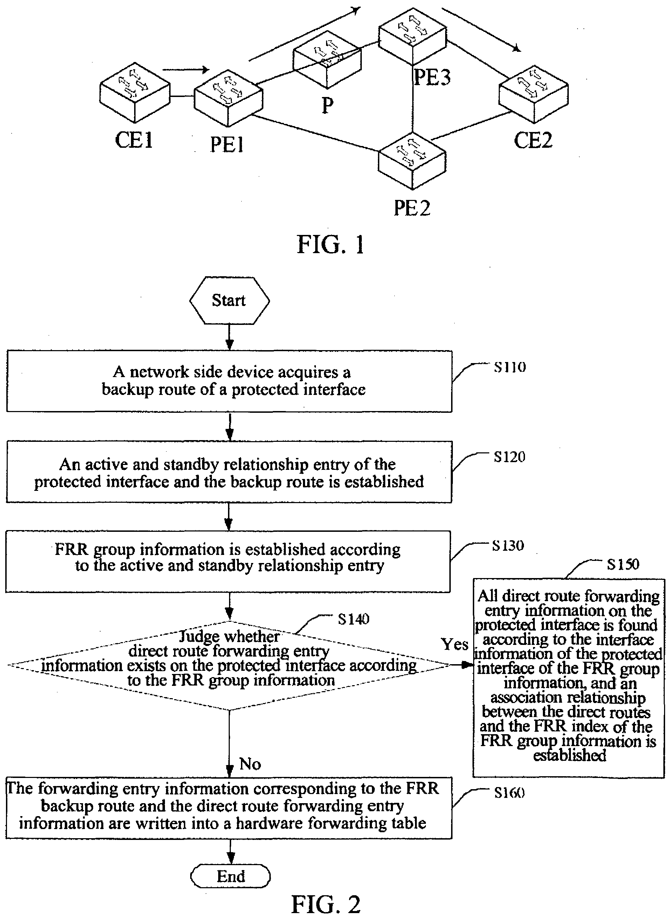

As shown in FIG. 1, there are two routes between CE1 and CE2, when a node or a route on the route PE1 to P to PE3 then to CE2 has a failure, the service traffic first is switched from PE3 to PE2 on PE1, and then the route will be replaced by waiting for the protocol convergence. The said route failure herein also includes the failure of a direct route from PE3 to CE2. From the detection message detecting the fault to the head node being triggered to perform the service switching, the number of the route hops between PE1 and CE2 is maximum, the influence on the time for transmitting the detection message is undoubtedly higher than other nodes or routes, and there is the most impact on the switching performance.

Relevant technologies are also known from US2009/207728A1 (BRYANT STEWART FREDERICK [GB] ET AL) 20 August 2009; CN102291311 1A ZTE CORP) 21 December 2011; CN101860482A (ZTE CORP) 13 October 2010; CN101562575A (H3C TECHNOLOGIES CO. LTD) 21 October 2009; and CN101442494A (ZTE CORP) 27 May 2009.

### Content of the invention

The embodiments of the present invention provide an Ethernet interface protection method and a network side device, so as to reduce the time overhead of packet detection, thus reducing the packet loss time and improving the expansibility and the compatibility.

The features of the method and the device according to the present invention are defined in the independent claims.

Also provided is an Ethernet interface protection method, comprising:
a network side device acquiring a backup route of a protected interface, establishing an active and standby relationship entry of the protected interface and the backup route, and establishing fast re-route (FRR) group information according to the active and standby relationship entry; and
judging whether direct route forwarding entry information exists on the protected interface according to the FRR group information; if the direct route forwarding entry information exists, then finding all direct route forwarding entry information on the protected interface according to index information of the protected interface in the FRR group information, and establishing an association relationship between direct routes and an FRR index of the FRR group information; and if the direct route forwarding entry information does not exist, then writing forwarding entry information corresponding to an FRR backup route and the direct route forwarding entry information into a hardware forwarding table;
wherein, the FRR group information includes: the FRR index information, the interface information of the protected interface and the forwarding entry information corresponding to the FRR backup route.

Wherein, the step of a network side device acquiring a backup route of a protected interface comprises: specifying the backup route of the protected interface via an Operation, Administration and Maintenance (OAM) command, or generating the backup route of the protected interface via a protocol.

The direct route forwarding entry information includes: route information of a network segment in which an interface address is and all address resolution protocol forwarding entry information belonging to that network segment.

The step of establishing an association relationship between direct routes and an FRR index of the FRR group information comprises:
writing the FRR index information, FRR active and standby status information and the direct route forwarding entry information into the hardware forwarding table, wherein, the FRR active and standby status information includes: status information whether current FRR traffic is in a primary route or in a backup route.

The method, after the step of establishing the association relationship between the direct routes and the FRR index of the FRR group information, further comprises:
establishing software information of the FRR group information, storing the software information of the FRR group information in a software table, and when the protected interface breaks down, searching the software table according to index information of the protected interface to obtain the FRR index information; and
modifying the active and standby status in the hardware forwarding table according to the FRR index information.

The software information of the FRR group information includes: the index information of the protected interface and the FRR index information.

The method, after the step of establishing the association relationship between the direct routes and the FRR index of the FRR group information, further comprises:
triggering an operation for releasing an FRR active and standby relationship via configuration or a protocol; and
retrieving the FRR index information according to the operation, deleting the hardware forwarding table, and releasing the association relationship between the direct routes and the FRR index of the FRR group information.

Also provided is network side device, comprising:
a protection group information establishment unit, configured to acquire a backup route of a protected interface, establish an active and standby relationship entry of the protected interface and the backup route, and establish fast re-route (FRR) group information according to the active and standby relationship entry; and
a route association unit, configured to judge whether direct route forwarding entry information exists on the protected interface according to the FRR group information; if the direct route forwarding entry information exists, then find all direct route forwarding entry information on the protected interface according to index information of the protected interface in the FRR group information, and establish an association relationship between direct routes and an FRR index of the FRR group information; and if the direct route forwarding entry information does not exist, then write forwarding entry information corresponding to an FRR backup route and the direct route forwarding entry information into a hardware forwarding table;
wherein, the FRR group information includes: the FRR index information, the interface information of the protected interface and the forwarding entry information corresponding to the FRR backup route.

The protection group information establishment unit is configured to specify the backup route of the protected interface via an Operation, Administration and Maintenance (OAM) command, or generate the backup route of the protected interface via a protocol.

The direct route forwarding entry information includes: route information of a network segment in which an interface address is and all address resolution protocol forwarding entry information belonging to that network segment.

The route association unit is configured to establish an association relationship between direct routes and an FRR index of the FRR group information in the following way: writing the FRR index information, FRR active and standby status information and the direct route forwarding entry information into the hardware forwarding table, wherein, the FRR active and standby status information includes: status information whether current FRR traffic is in a primary route or in a backup route.

The network side device further comprises an active and standby status switch unit, configured to: establish software information of the FRR group information, store the software information of the FRR group information in a software table, and when the protected interface breaks down, search the software table according to index information of the protected interface to obtain the FRR index information; and modify the active and standby status in the hardware forwarding table according to the FRR index information.

The software information of the FRR group information includes: the index information of the protected interface and the FRR index information.

The network side device further comprises an index retrieving unit, configured to: trigger an operation for releasing an FRR active and standby relationship via configuration or a protocol; and retrieve the FRR index information according to the operation, delete the hardware forwarding table, and release the association relationship between the direct routes and the FRR index of the FRR group information.

There are the following advantages by adopting the technical scheme of the present invention: in the case of the route having the failure, the present invention only needs traffic switching of a single protection group of the breakdown node which can protect the normal running of all service traffics which take that interface as the output interface, thereby under the situation of hopping the multiple devices, reducing the time limitation for transmitting the detection message by hopping the multiple devices; and with the traffic switching mechanism of a multiple-to-one mapping (in which all the direct routes under the protected interface correspond to the same FRR group), the traffics are to be switched at the breakdown node so as to reduce the time overhead of the packet detection, thus reducing the packet loss time and improving the performance of the network side device. Moreover, the detection is only required to be finished on a single node without supporting by the opposite end device, which improves the expansibility and the compatibility of the network side device.

### Brief description of drawings

FIG. 1 is a schematic diagram of a networking framework in accordance with the related art;
FIG. 2 is a flow chart of a method in accordance with an embodiment of the present invention;
FIG. 3 is another flow chart of a method in accordance with an embodiment of the present invention;
FIG. 4 is another flow chart of a method in accordance with an embodiment of the present invention;
FIG. 5 is a flow chart of an application example of a method in accordance with an embodiment of the present invention;
FIG. 6 is a structure diagram of a network side device in accordance with an embodiment of the present invention;
FIG. 7 is another structure diagram of a network side device in accordance with an embodiment of the present invention;
FIG. 8 is another structure diagram of a network side device in accordance with an embodiment of the present invention.

### Preferred embodiments of the present invention

The present invention is illustrated in detail in combination with the accompanying drawings and embodiments hereinafter. It should be understood that the embodiments described here are only used for explaining the present invention, rather than limiting the present invention.

An embodiment of the present invention provides an Ethernet interface protection method, as shown in FIG. 2, and the method includes the following steps.

In S110, a network side device acquires a backup route of a protected interface.

The protected interface may be the port of PE3, as shown in FIG. 1, which is directed to CE2.

In that step S110, specifically, the network side device specifies the backup route of the protected interface via an Operation, Administration and Maintenance (OAM) command, or generates the backup route of the protected interface via a protocol.

In S120, an active and standby relationship entry of the protected interface and the backup route is established.

In S130, FRR group information is established according to the active and standby relationship entry; wherein, in this embodiment, the FRR group information includes: FRR index information, interface information of the protected interface and forwarding entry information corresponding to the FRR backup route, and the FRR group information is also FRR active and standby forwarding information.

The forwarding entry information corresponding to the FRR backup route includes information of Media Access Control (MAC), PORT, next hop IP, etc.

The FRR index information is an FRR identification assigned after specifying the backup route of the protected interface by configuration, and the FRR index information is used for identifying the corresponding relation of the protected interface and the backup route.

In this step S130, the FRR index information is assigned by invoking an FRR index resource management interface. In a distributed system (wherein the network side device includes a master control device and line cards, and wherein, the master control device and the line cards are separated), the master control device further needs to synchronously forward the FRR index and the FRR group information taking the FRR index as the identification to each line card. The line card judges whether the FRR group information needs to be written in a hardware table after receiving the FRR group information sent by the master control device; if yes, then the FRR group information is wrote into the hardware table; if it does not need, then it is not written. The FRR group information may be issued to each line card before the direct route corresponding to the protected interface is issued, and also may be issued to each line card after the direct route is issued. In this embodiment, the steps S110, S120 and S130 are performed by the master control device, and the steps S140, S150, S160, S170 and S180 are performed by the line card. If it is an integrated system, all steps in this method are performed by the network side device.

In S140, it is judged whether direct route forwarding entry information exists on the protected interface according to the FRR group information; if yes, then step S150 is executed; if not, then step S160 is executed.

In this embodiment, specifically, the direct route forwarding entry information includes route information of a network segment in which an interface address is and all Address Resolution Protocol (ARP) forwarding entry information belonging to that network segment, as well as the interface information of the protected interface which is also included in the FRR group information.

In S150, all direct route forwarding entry information on the protected interface is found according to the interface information of the protected interface of the FRR group information, and an association relationship between the direct routes and the FRR index of the FRR group information is established; and then S160 is executed.

In this step S150, the direct route of the protected interface and the FRR index resource management interface are invoked, all the direct route forwarding entry information is acquired through FRR primary route information, and the association relationship between the direct route forwarding entry information of the protected interface and the FRR index is established; more specifically, the establishment of the association relationship is that: the FRR index information, FRR active and standby status information and the direct route forwarding entry information are written into a hardware forwarding table. The FRR active and standby status information includes: status information whether the current FRR traffic is in the primary route or in the backup route, and generally being in the primary route by default. In addition, for an exchange board which supports an active-standby switching function (not only having a master control board, but also having a standby board), a corresponding relation table of the FRR index and the FRR group information is also required to be maintained on the standby board.

In S160, the forwarding entry information corresponding to the FRR backup route and the direct route forwarding entry information are written into a hardware forwarding table.

The method provided by the embodiment of the present invention, in the case of the route having the failure, only needs traffic switching of a single protection group of the breakdown node which can protect the normal running of all service traffics which take that interface as the output interface, thereby under the situation of hopping the multiple devices, reducing the time limitation for transmitting the detection message by hopping the multiple devices; and with the traffic switching mechanism of a multiple-to-one mapping (in which all the direct routes under the protected interface correspond to the same FRR group), the traffics are to be switched at the breakdown node so as to reduce the time overhead of the packet detection, thus reducing the packet loss time and improving the performance of the network side device.

In the above-mentioned embodiment, the protection process of the protected interface is finished.

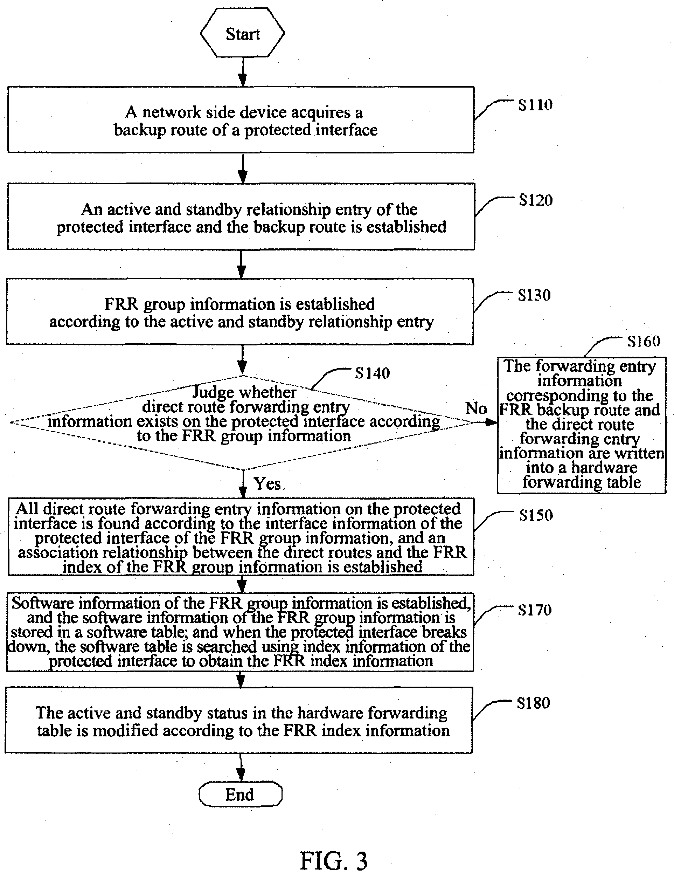

In a further embodiment, the method further includes: a traffic switching process after the protection process provided according to the above-mentioned embodiment, as shown in FIG. 3, the traffic switching process includes the following steps.

In S170, software information of the FRR group information is established, and the software information of the FRR group information is stored in a software table; and when the protected interface breaks down, the software table is searched using index information of the protected interface to obtain the FRR index information.

It is detected that all the member physical ports of the protected interface break down through the breakdown detection mechanism.

More specifically, the software information of the FRR group information including: the index information of the protected interface and the FRR index information.

In S180, the active and standby status in the hardware forwarding table is modified according to the FRR index information.

The switching of the active and standby status is finished, the primary route status is switched into the backup route status (it is the primary route status by default at the beginning), that makes the detection only need to be finished at a single node without supporting by the opposite end device, and improves the expansibility and compatibility of the network side device.

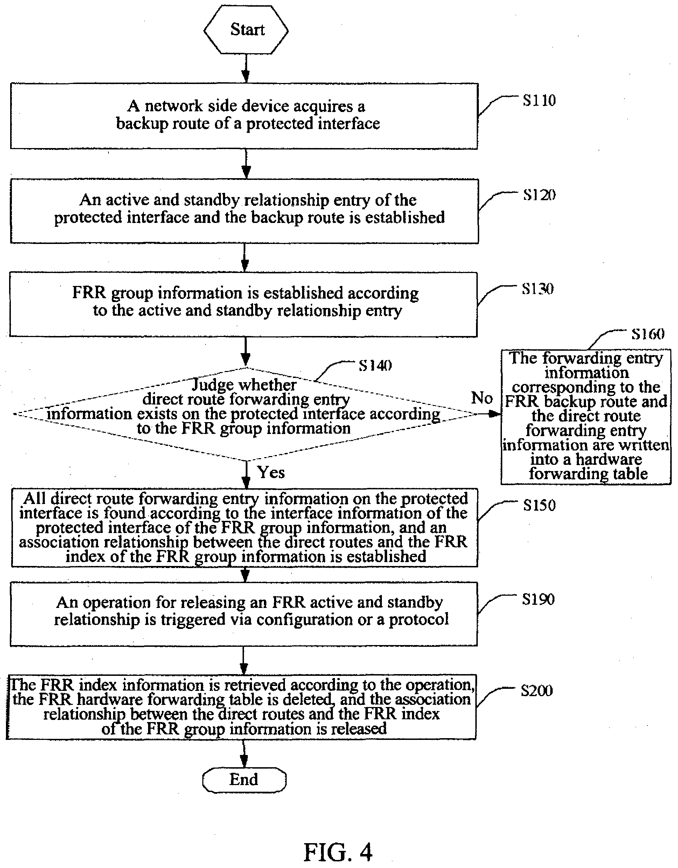

On the basis of the above-mentioned embodiment, this method further includes an FRR index retrieving procedure, and the FRR active and standby relationship is released through the FRR index retrieving procedure, in order to save the hardware resources of the route table. Specifically, as shown in FIG. 4, the FRR index retrieving procedure includes the steps:
in S190, an operation for releasing an FRR active and standby relationship is triggered via configuration or a protocol;
in S200, the FRR index information is retrieved according to the operation, the FRR hardware forwarding table is deleted, and the association relationship between the direct routes and the FRR index of the FRR group information is released (that is, the FRR index information in the hardware forwarding table is deleted).

In this embodiment, if it is in the distributed system, the master control device triggers the operation for retrieving the FRR index via configuration or a protocol, and then the master control device retrieves the FRR index information and synchronously forwards the retrieving message to the line card. The line card deletes the FRR hardware forwarding table after receiving the message, and releases the association relationship between the direct routes and the FRR index of the FRR group information.

An application example of the above-mentioned method embodiments is also provided hereinafter, that is, it is described that a message forwarding flow is finished using the above-mentioned methods.

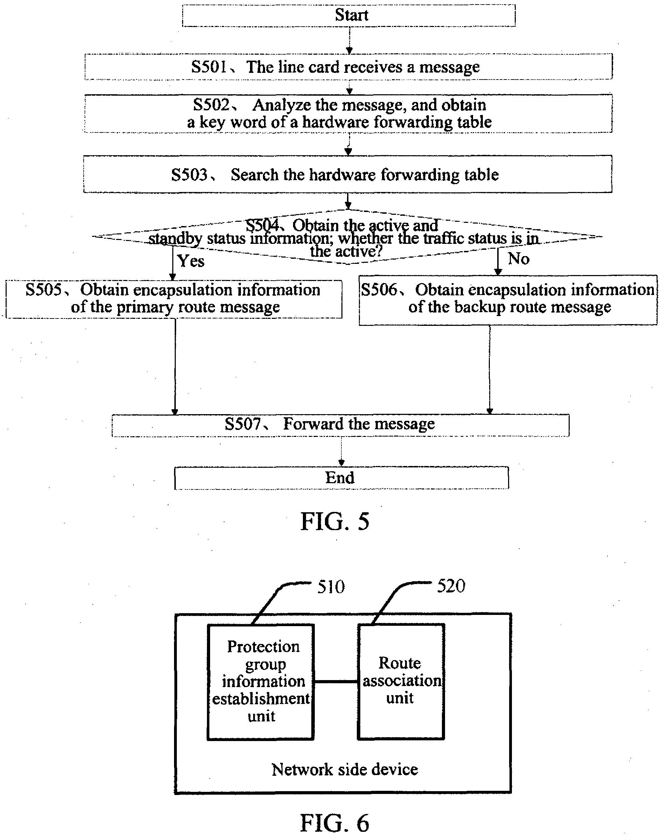

Taking the distributed system as an example, as shown in FIG. 5, in the distributed system (if it is in the integrated system, the flow is executed by the network side device), the message forwarding flow includes the following steps:
in S501, the line card receives a message;
in S502, analyze the message, and obtain a key word of a hardware forwarding table;
in S503, search the hardware forwarding table;
in S504, obtain the active and standby status information in the hardware forwarding table; if a primary route is effective, then step S505 is executed; if a backup route is effective, then step S506 is executed;
in S505, obtain encapsulation information of the primary route message;
in S506, obtain encapsulation information of the backup route message;
in S507, encapsulate the message, and finish the forwarding of the message.

An embodiment of the present invention further provides a network side device which is used for realizing the method provided by each above-mentioned embodiment, and as shown in FIG. 6, the network side device includes the following units.

A protection group information establishment unit 510 is configured to acquire a backup route of a protected interface, establish an active and standby relationship entry of the protected interface and the backup route, and establish FRR group information according to the active and standby relationship entry; more specifically, the protection group information establishment unit 510 is configured to specify the backup route of the protected interface through an OAM command, or generate the backup route of the protected interface via a protocol.

A route association unit 520 is configured to judge whether direct route forwarding entry information exists on the protected interface according to the FRR group information; if the direct route forwarding entry information exists, then find all direct route forwarding entry information on the protected interface according to index information of the protected interface in the FRR group information, and establish an association relationship between direct routes and an FRR index of the FRR group information; and if the direct route forwarding entry information does not exist, then write forwarding entry information corresponding to an FRR backup route and the direct route forwarding entry information into a hardware forwarding table; wherein, the FRR group information includes: the FRR index information, the interface information of the protected interface and the forwarding entry information corresponding to the FRR backup route. More specifically, the direct route forwarding entry information includes: route information of a network segment in which an interface address is and all address resolution protocol forwarding entry information belonging to that network segment.

More specifically, the procedure of the route association unit establishing an association relationship between direct routes and an FRR index of the FRR group information is: writing the FRR index information, FRR active and standby status information and the direct route forwarding entry information into the hardware forwarding table, wherein, the FRR active and standby status information includes: status information whether current FRR traffic is in a primary route or in a backup route.

The network side device provided by the embodiment of the present invention can be a CE, a PE, etc. In the case of the route having the failure, the present invention only needs traffic switching of a single protection group of the breakdown node which can protect the normal running of all service traffics which take that interface as the output interface, thereby under the situation of hopping the multiple devices, reducing the time limitation for transmitting the detection message by hopping the multiple devices; and with the traffic switching mechanism of a multiple-to-one mapping (in which all the direct routes under the protected interface correspond to the same FRR group), the traffics are to be switched at the breakdown node so as to reduce the time overhead of the packet detection, thus reducing the packet loss time and improving the performance of the network side device.

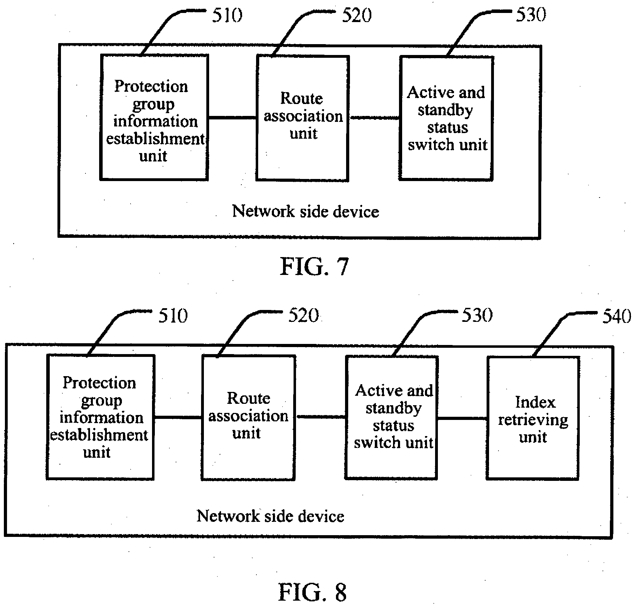

In another embodiment, furthermore, as shown in FIG. 7, the network side device further comprises an active and standby status switch unit 530, which is configured to: establish software information of the FRR group information, store the software information of the FRR group information in a software table, and when the protected interface breaks down, search the software table according to index information of the protected interface to obtain the FRR index information; and modify the active and standby status in the hardware forwarding table according to the FRR index information. The software information of the FRR group information includes: the index information of the protected interface and the FRR index information.

In another embodiment, furthermore, as shown in FIG. 8, the network side device further comprises an index retrieving unit 540, which is configured to: trigger an operation for releasing an FRR active and standby relationship via configuration or a protocol; and retrieve the FRR index information according to the operation, delete the FRR hardware forwarding table, and release the association relationship between the direct routes and the FRR index of the FRR group information, to save the route table hardware resources.

The above description is only the preferably embodiments of the present invention and is not intended to limit the present invention, the scope of the invention is to be determined by the appended claims.

### Industrial applicability

In the case of the route having the failure, the present invention only needs traffic switching of a single protection group of the breakdown node which can protect the normal running of all service traffics which take that interface as the output interface, thereby under the situation of hopping the multiple devices, reducing the time limitation for transmitting the detection message by hopping the multiple devices; and with the traffic switching mechanism of a multiple-to-one mapping (in which all the direct routes under the protected interface correspond to the same FRR group), the traffics are to be switched at the breakdown node so as to reduce the time overhead of the packet detection, thus reducing the packet loss time and improving the performance of the network side device. Moreover, the detection is only required to be finished on a single node without supporting by the opposite end device, which improves the expansibility and the compatibility of the network side device.

## Claims

1. An Ethernet interface protection method, **characterized by**, the method comprising:
a network side device acquiring a backup route of a protected interface (S110), establishing an active and standby relationship entry of the protected interface and the backup route (S120), and establishing fast re-route FRR group information according to the active and standby relationship entry (S130); and
judging whether direct route forwarding entry information exists on the protected interface according to the FRR group information (S140); if the direct route forwarding entry information exists, then finding all direct route forwarding entry information on the protected interface according to index information of the protected interface in the FRR group information, and establishing an association relationship between direct routes and an FRR index of the FRR group information (S150); and if the direct route forwarding entry information does not exist, then writing forwarding entry information corresponding to an FRR backup route and the direct route forwarding entry information into a hardware forwarding table (S160);
wherein, the FRR group information includes: the FRR index information, the interface information of the protected interface and the forwarding entry information corresponding to the FRR backup route.

2. The method according to claim 1, wherein, the step of a network side device acquiring a backup route of a protected interface comprises:
specifying the backup route of the protected interface via an Operation, Administration and Maintenance OAM command, or generating the backup route of the protected interface via a protocol.

3. The method according to claim 1 or 2, wherein, the direct route forwarding entry information includes: route information of a network segment in which an interface address is and all address resolution protocol forwarding entry information belonging to that network segment.

4. The method according to claim 1, wherein, the step of establishing an association relationship between direct routes and an FRR index of the FRR group information comprises:
writing the FRR index information, FRR active and standby status information and the direct route forwarding entry information into the hardware forwarding table, wherein, the FRR active and standby status information includes: status information whether current FRR traffic is in a primary route or in a backup route.

5. The method according to claim 1 or 2, after the step of establishing the association relationship between the direct routes and the FRR index of the FRR group information, further comprising:
establishing software information of the FRR group information, storing the software information of the FRR group information in a software table, and when the protected interface breaks down, searching the software table according to index information of the protected interface to obtain the FRR index information (S170); and
modifying the active and standby status in the hardware forwarding table according to the FRR index information (S180).

6. The method according to claim 5, wherein, the software information of the FRR group information includes: the index information of the protected interface and the FRR index information.

7. The method according to claim 1 or 2, after the step of establishing the association rel ationship between the direct routes and the FRR index of the FRR group information, further comprising:
triggering an operation for releasing an FRR active and standby relationship via configuration or a protocol (S190); and
retrieving the FRR index information according to the operation, deleting the hardware forwarding table, and releasing the association relationship between the direct routes and the FRR index of the FRR group information (S200).

8. A network side device, **characterized by**, the device comprising:
a protection group information establishment unit, configured to acquire a backup route of a protected interface, establish an active and standby relationship entry of the protected interface and the backup route, and establish fast re-route FRR group information according to the active and standby relationship entry; and
a route association unit, configured to judge whether direct route forwarding entry information exists on the protected interface according to the FRR group information; if the direct route forwarding entry information exists, then find all direct route forwarding entry information on the protected interface according to index information of the protected interface in the FRR group information, and establish an association relationship between direct routes and an FRR index of the FRR group information; and if the direct route forwarding entry information does not exist, then write forwarding entry information corresponding to an FRR backup route and the direct route forwarding entry information into a hardware forwarding table;
wherein, the FRR group information includes: the FRR index information, the interface information of the protected interface and the forwarding entry information corresponding to the FRR backup route.

9. The network side device according to claim 8, wherein, the protection group information establishment unit is configured to specify the backup route of the protected interface via an Operation, Administration and Maintenance OAM command, or generate the backup route of the protected interface via a protocol.

10. The network side device according to claim 8, wherein, the direct route forwarding entry information includes: route information of a network segment in which an interface address is and all address resolution protocol forwarding entry information belonging to that network segment.

11. The network side device according to claim 8 or 9, wherein, the route association unit is configured to establish an association relationship between direct routes and an FRR index of the FRR group information in the following way: writing the FRR index information, FRR active and standby status information and the direct route forwarding entry information into the hardware forwarding table, wherein, the FRR active and standby status information includes: status information whether current FRR traffic is in a primary route or in a backup route.

12. The network side device according to claim 8 or 9, further comprising an active and standby status switch unit, configured to: establish software information of the FRR group information, store the software information of the FRR group information in a software table, and when the protected interface breaks down, search the software table according to index information of the protected interface to obtain the FRR index information; and modify the active and standby status in the hardware forwarding table according to the FRR index information.

13. The network side device according to claim 12, wherein, the software information of the FRR group information includes: the index information of the protected interface and the FRR index information.

14. The network side device according to claim 8 or 9, further comprising an index retrieving unit, configured to: trigger an operation for releasing an FRR active and standby relationship via configuration or a protocol; and retrieve the FRR index information according to the operation, delete the hardware forwarding table, and release the association relationship between the direct routes and the FRR index of the FRR group information.

## Patentansprüche

1. Schutzverfahren für eine Ethernet-Schnittstelle, **dadurch gekennzeichnet, dass** das Verfahren aufweist:
eine Netzwerk-Seitenvorrichtung, die einen Backup-Pfad einer geschützten Schnittstelle (S110) erlangt, Einrichten eines aktiven und Standby-bezogenen Eingangs der geschützten Schnittstelle und des Backup-Pfads (S120), und Einrichten einer schnellen Umleit-FRR-Gruppeninformation gemäß dem aktiven und Standby-bezogenen Eingang (S130); und
Entscheiden, ob eine Direktpfad-Weiterleitungs-Eingangsinformation auf der geschützten Schnittstelle gemäß der FRR-Gruppeninformation existiert; falls die Direktpfad-Weiterleitungs-Eingangsinformation besteht, dann Auffinden aller Direktpfad-Weiterleitungs-Eingangsinformation auf der geschützten Schnittstelle gemäß Indexinformation der geschützten Schnittstelle in der FRR-Gruppeninformation, und Einrichten einer Zuordnungsbeziehung zwischen Direktpfaden und einem FRR-Index der FRR-Gruppeninformation (S150); und falls die Direktpfad-Weiterleitungs-Eingangsinformation nicht existiert, dann Schreiben von Weiterleitungs-Eingangsinformation entsprechend einem FRR-Backup-Pfad und der Direktpfad-Weiterleitungs-Eingangsinformation in eine Hardware-Weiterleitungstabelle (S160);
wobei die FRR-Gruppeninformation aufweist: die FRR-Indexinformation, die Schnittstelleninformation der geschützten Schnittstelle und die Weiterleitungs- Eingangsinformation entsprechend dem FRR-Backup-Pfad.

2. Verfahren nach Anspruch 1, wobei der Schritt, dass die Netzwerk-Seitenvorrichtung einen Backup-Pfad einer geschützten Schnittstelle erlangt umfasst:
Spezifizieren des Backup-Pfads der geschützten Schnittstelle über einen Operations-, Administrations- und Maintenance- OAM-Befehl, oder Erzeugen des Backup-Pfads der geschützten Schnittstelle über ein Protokoll.

3. Verfahren nach Anspruch 1 oder 2, wobei die Direktpfad-Weiterleitungs-Eingangsinformation umfasst: eine Pfad-Information eines Netzwerk-Segments, in der sich eine Schnittstellen-Adresse befindet und alle Adressen-Auflösungsprotokoll-Weiterleitungs-Eingangsinformation zu dem Netzwerksegment gehören.

4. Verfahren nach Anspruch 1, wobei der Schritt der Einrichtung einer Zuordnungsbeziehung zwischen direkten Pfaden und einem FRR-Index der FRR-Gruppen-Information umfasst:
Schreiben der FRR-Indexinformation, der aktiven und Standby FRR-Statusinformation und der Direktpfad- Weiterleitungs-Eingangsinformation in die Hardware Weiterleitungstabelle, wobei die aktive und Standby FFR-Status-Information umfasst: Statusinformation, ob sich der gegenwärtige FRR-Verkehr in einem Hauptpfad oder in einem Backup-Pfad befindet.

5. Verfahren nach Anspruch 1 oder 2, welches nach dem Schritt der Einrichtung der Zuordnungsbeziehung zwischen den direkten Pfaden und dem FRR-Index der FRR-Gruppeninformation, weiter umfasst:
Einrichten von Software-Information der FRR-Gruppeninformation, Speichern der Software-Information der FRR-Gruppeninformation in einer Software-Tabelle, und wenn die geschützte Schnittstelle unterbricht, Suchen der Software-Tabelle gemäß der IndexInformation der geschützten Schnittstelle, um die FRR-Indexinformation (S170) zu erhalten; und
Modifizieren des aktiven und Standby-Status in der Hardware-Weiterleitungs-Tabelle gemäß der FRR-Indexinformation (S 180).

6. Verfahren nach Anspruch 5, wobei die Software-Information der FRR- Gruppeninformation umfasst: die Indexinformation der geschützten Schnittstelle und der FRR-Indexinformation.

7. Verfahren nach Anspruch 1 oder 2, welches nach dem Schritt des Einrichtens der Zuordnungsbeziehung zwischen den direkten Pfaden und dem FRR-Index der FRR-Gruppeninformation, weiter umfasst:
Auslösen einer Operation zur Freigabe einer aktiven und Standby FRR-Beziehung über eine Konfiguration oder ein Protokoll (S 190); und
Abrufen der FRR-Indexinformation gemäß der Operation, Löschen der Hardware-Weiterleitungs-Tabelle, und auslösen der Zuordnungsbeziehung zwischen den direkten Pfaden und dem FRR-Index der FRR-Gruppeninformation (S200).

8. Netzwerk-Seitenvorrichtung, **dadurch gekennzeichnet, dass** die Einrichtung umfasst:
eine Schutzgruppeninformations-Einrichtungseinheit, die ausgestaltet ist, einen Backup-Pfad einer geschützten Schnittstelle zu erlangen, einen aktiven und Standby-Zuordnungs-Eingang der geschützten Schnittstelle und den Backup-Pfad einzurichten, und Einrichten einer schnelle Umleit-FRR-Gruppeninformation gemäß dem aktiven und Standby-bezogenen Eingang; und
eine Pfad-Zuordnungsgseinheit, die ausgestaltet ist, zu entscheiden, ob eine Direktpfad-Weiterleitungs-Eingangsinformation auf der geschützten Schnittstelle gemäß der FRR-Gruppeninformation existiert;
wenn eine Direktpfad-Weiterleitungs-Eingangsinformation existiert, dann finde alle Direktpfad-Weiterleitungs-Eingangsinformation auf der geschützten Schnittstelle gemäß der Indexinformation der geschützten Schnittstelle in der FRR Gruppen-Information, und richte eine Zuordnungsbeziehung zwischen Direktpfaden und einem FRR-Index der FRR-Gruppeninformation ein; und
wenn die Direktpfad-Weiterleitungs-Eingangsinformation nicht existiert, dann schreibe Weiterleitungs-Eingangsinformation gemäß einem FRR-Backup-Pfad und die Direktpfad-Weiterleitungs-Eingangsinformation in eine Hardware Weiterleitungstabelle;
wobei die FRR-Grupeninformation umfasst: die FRR-Indexinformation, die Schnittstelleninformation der geschützten Schnittstelle und die Weiterleitungs-Eingangsinformation gemäß dem FRR Backup-Pfad.

9. Netzwerk-Seitenvorrichtung nach Anspruch 8, worin die Schutzgruppeninformations-Einrichtungseiheit ausgestaltet ist, den Backup-Pfad der geschützten Schnittstelle zu über einen Operations-, Administrations- und Maintenance OAM-befehl zu spezifizieren, oder den Backup-Pfad der geschützten Schnittstelle über ein Protokoll zu erzeugen.

10. Netzwerk-Seitenvorrichtung nach Anspruch 8, worin die Direktpfad-Weiterleitungs-Eingangsinformation umfasst: Pfadinformation eines Netzwerksegments, in dem sich eine Schnittstelleadresse befindet, und alle Adress-Auflösungsprotokoll-Weiterleitungs-Eingangsinformation zu dem Netzwerksegment gehören.

11. Netzwerk-Seitenvorrichtung nach Anspruch 8 oder 9, worin die Pfad-Zuordnungseinheit ausgestaltet ist, eine Zuordnungs-Beziehung zwischen direkten Pfaden und einem FRR-Index der FRR-Gruppeninformation in der folgenden Art und Weise einzurichten: Schreiben der FRR-Indexinformation, der aktiven und Standby-FRR-Statusinformation und der direkten Pfad-Weiterleitungs-Eingangsinformation in die Hardware-Weiterleitungs-Tabelle, worin die aktiven und Standby-FRR Statusinformation umfasst: Statusinformation, ob sich der gegenwärtige FRR-Verkehr in einem Hauptpfad befindet oder in einem Backup-Pfad.

12. Netzwerk-Seitenvorrichtung nach Anspruch 8 oder 9, welche weiter eine aktive und eine Standby-Status-Schalteinheit umfasst, die ausgestaltet ist: Einrichten einer Software-Information der FRR-Gruppeninformation, Speichern der Software-Information der FRR-Gruppeninformation in einer Software-Tabelle, und wenn die geschützten Schnittstelle unterbricht, Suchen der Software-Tabelle gemäß der Indexinformation der geschützten Schnittstelle, um die FRR-Indexinformation zu erhalten; und Modifizieren des aktiven und Standby-Status in der Hardware-Weiterleitungstabelle gemäß der FRR-Indexinformation.

13. Netzwerk-Seitenvorrichtung nach Anspruch 12, worin die Software-Information der FRR-Gruppeninformation umfasst: die Indexinformation der geschützten Schnittstelle und der FRR-Indexinformation.

14. Netzwerk-Seitenvorrichtung nach Anspruch 8 oder 9, welche weiter eine Indexabfrageeinheit umfasst, die ausgestaltet ist: Auslösen einer Operation zur Freisetzung einer aktiven und Standby-FRR-Beziehung über Konfiguration oder ein Protokoll; und Abfragen der FRR-Indexinformation gemäß der Operation, Löschen der Hardware-Weiterleitungstabelle, und Freigeben der Zuordnungsbeziehung zwischen den direkten Pfaden und dem FRR-Index der FRR-Gruppeninformation.

## Revendications

1. Procédé de protection d'interface Ethernet, **caractérisé en ce que** le procédé comporte :
un dispositif côté réseau acquérant un trajet de réserve d'une interface protégée (S110), établissant une entrée de relation active et de secours de l'interface protégée et du trajet de réserve (S120), et établissant des informations de groupe de réacheminement rapide, FRR, selon l'entrée de relation active et de secours (S130) ; et comportant les étapes ci-dessous consistant à
déterminer si des informations d'entrée d'acheminement par trajet direct existent sur l'interface protégée selon les informations de groupe de réacheminement FRR (S140) ; si les informations d'entrée d'acheminement par trajet direct existent, trouver toutes les informations d'entrée d'acheminement par trajet direct sur l'interface protégée selon des informations d'index de l'interface protégée dans les informations de groupe de réacheminement FRR, et établir une relation d'association entre des trajets directs et un index de réacheminement FRR des informations de groupe de réacheminement FRR (S 150) ; et si les informations d'entrée d'acheminement par trajet direct n'existent pas, écrire alors des informations d'entrée d'acheminement correspondant à un trajet de réserve de réacheminement FRR et les informations d'entrée d'acheminement par trajet direct dans une table d'acheminement de matériel (S160) ;
dans lequel les informations de groupe de réacheminement FRR incluent : les informations d'index de réacheminement FRR, les informations d'interface de l'interface protégée et les informations d'entrée d'acheminement correspondant au trajet de réserve de réacheminement FRR.

2. Procédé selon la revendication 1, dans lequel, l'étape d'acquisition, par un dispositif côté réseau, d'un trajet de réserve d'une interface protégée comporte les étapes ci-dessous consistant à :
spécifier le trajet de réserve de l'interface protégée par l'intermédiaire d'une commande de gestion, exploitation et maintenance, OAM, ou générer le trajet de réserve de l'interface protégée par l'intermédiaire d'un protocole.

3. Procédé selon la revendication 1 ou 2, dans lequel, les informations d'entrée d'acheminement par trajet direct incluent : des informations de trajet d'un segment de réseau dans lequel est située une adresse d'interface, et toutes les informations d'entrée d'acheminement de protocole de résolution d'adresse appartenant à ce segment de réseau.

4. Procédé selon la revendication 1, dans lequel, l'étape consistant à établir une relation d'association entre des trajets directs et un index de réacheminement FRR des informations de groupe de réacheminement FRR comprend l'étape ci-dessous consistant à :
écrire les informations d'index de réacheminement FRR, les informations d'état actif et de secours de réacheminement FRR et les informations d'entrée d'acheminement par trajet direct, dans la table d'acheminement de matériel, dans lequel, les informations d'état actif et de secours de réacheminement FRR incluent : des informations d'état indiquant si un trafic de réacheminement FRR en cours est situé dans un trajet principal ou dans un trajet de réserve.

5. Procédé selon la revendication 1 ou 2, comportant en outre, après l'étape consistant à établir la relation d'association entre les trajets directs et l'index de réacheminement FRR des informations de groupe de réacheminement FRR, les étapes ci-dessous consistant à :
établir des informations logicielles des informations de groupe de réacheminement FRR, stocker les informations logicielles des informations de groupe de réacheminement FRR dans une table logicielle, et lorsque l'interface protégée subit une défaillance, rechercher dans la table logicielle selon des informations d'index de l'interface protégée en vue d'obtenir les informations d'index de réacheminement FRR (S 170) ; et
modifier l'état actif et de secours dans la table d'acheminement de matériel selon les informations d'index de réacheminement FRR (S 180).

6. Procédé selon la revendication 5, dans lequel, les informations logicielles des informations de groupe de réacheminement FRR incluent : les informations d'index de l'interface protégée et les informations d'index de réacheminement FRR.

7. Procédé selon la revendication 1 ou 2, comportant en outre, après l'étape consistant à établir la relation d'association entre les trajets directs et l'index de réacheminement FRR des informations de groupe de réacheminement FRR, les étapes ci-dessous consistant à :
déclencher une opération de libération d'une relation active et de secours de réacheminement FRR par le biais d'une configuration ou d'un protocole (S190) ; et
récupérer les informations d'index de réacheminement FRR selon l'opération, supprimer la table d'acheminement de matériel, et libérer la relation d'association entre les trajets directs et l'index de réacheminement FRR des informations de groupe de réacheminement FRR (S200).

8. Dispositif côté réseau, **caractérisé en ce que** le dispositif comporte :
une unité d'établissement d'informations de groupe de protection, configurée de manière à acquérir un trajet de réserve d'une interface protégée, à établir une entrée de relation active et de secours de l'interface protégée et du trajet de réserve, et à établir des informations de groupe de réacheminement rapide, FRR, selon l'entrée de relation active et de secours ; et
une unité d'association de trajets, configurée de manière à déterminer si des informations d'entrée d'acheminement par trajet direct existent sur l'interface protégée selon les informations de groupe de réacheminement FRR ; si les informations d'entrée d'acheminement par trajet direct existent, trouver alors toutes les informations d'entrée d'acheminement par trajet direct sur l'interface protégée selon des informations d'index de l'interface protégée dans les informations de groupe de réacheminement FRR, et établir une relation d'association entre des trajets directs et un index de réacheminement FRR des informations de groupe de réacheminement FRR ; et si les informations d'entrée d'acheminement par trajet direct n'existent pas, écrire alors des informations d'entrée d'acheminement correspondant à un trajet de réserve de réacheminement FRR et les informations d'entrée d'acheminement par trajet direct dans une table d'acheminement de matériel ;
dans lequel les informations de groupe de réacheminement FRR incluent : les informations d'index de réacheminement FRR, les informations d'interface de l'interface protégée et les informations d'entrée d'acheminement correspondant au trajet de réserve de réacheminement FRR.

9. Dispositif côté réseau selon la revendication 8, dans lequel, l'unité d'établissement d'informations de groupe de protection est configurée de manière à spécifier le trajet de réserve de l'interface protégée par l'intermédiaire d'une commande de gestion, exploitation et maintenance, OAM, ou à générer le trajet de réserve de l'interface protégée par l'intermédiaire d'un protocole.

10. Dispositif côté réseau selon la revendication 8, dans lequel, les informations d'entrée d'acheminement par trajet direct incluent : des informations de trajet d'un segment de réseau dans lequel est située une adresse d'interface, et toutes les informations d'entrée d'acheminement de protocole de résolution d'adresse appartenant à ce segment de réseau.

11. Dispositif côté réseau selon la revendication 8 ou 9, dans lequel, l'unité d'association de trajets est configurée de manière à établir une relation d'association entre des trajets directs et un index de réacheminement FRR des informations de groupe de réacheminement FRR, de la façon suivante, consistant à : écrire les informations d'index de réacheminement FRR, les informations d'état actif et de secours de réacheminement FRR et les informations d'entrée d'acheminement par trajet direct, dans la table d'acheminement de matériel, dans lequel, les informations d'état actif et de secours de réacheminement FRR incluent : des informations d'état indiquant si un trafic de réacheminement FRR en cours est situé dans un trajet principal ou dans un trajet de réserve.

12. Dispositif côté réseau selon la revendication 8 ou 9, comprenant en outre une unité de commutation entre état actif et de secours, configurée de manière à : établir des informations logicielles des informations de groupe de réacheminement FRR, stocker les informations logicielles des informations de groupe de réacheminement FRR dans une table logicielle, et lorsque l'interface protégée subit une défaillance, rechercher dans la table logicielle selon des informations d'index de l'interface protégée en vue d'obtenir les informations d'index de réacheminement FRR ; et modifier l'état actif et de secours dans la table d'acheminement de matériel selon les informations d'index de réacheminement FRR.

13. Dispositif côté réseau selon la revendication 12, dans lequel, les informations logicielles des informations de groupe de réacheminement FRR incluent : les informations d'index de l'interface protégée et les informations d'index de réacheminement FRR.

14. Dispositif côté réseau selon la revendication 8 ou 9, comprenant en outre une unité de récupération d'index, configurée de manière à : déclencher une opération de libération d'une relation active et de secours de réacheminement FRR par le biais d'une configuration ou d'un protocole ; et récupérer les informations d'index de réacheminement FRR selon l'opération, supprimer la table d'acheminement de matériel, et libérer la relation d'association entre les trajets directs et l'index de réacheminement FRR des informations de groupe de réacheminement FRR.
